# EUROPEAN PATENT SPECIFICATION

(11) **EP 0 840 808 B1**
(45) Date of publication and mention of the grant of the patent: **25.04.2001**
(21) Application number: 96923793.2
(22) Date of filing: 19.07.1996
(51) Int. Cl.: C22B 11/02, C22B 11/00, C22B 7/00

(54) **METHOD OF PURIFYING GOLD**
VERFAHREN ZUR REINIGUNG VON GOLD
PROCEDE DE PURIFICATION DE L'OR

(30) Priority: 25.07.1995 CA 2154608; 08.05.1996 GB 9609520
(43) Date of publication of application: 13.05.1998
(73) Proprietor: Protium Metals Inc., North York, Ontario M3H 2R8 (CA)
(72) Inventor: HANNA, Mourad, Michael, North York, Ontario M3H 2R8 (CA); LAKSHMANAN, Vaikuntam, Iyer, Mississauga, Ontario L5L 5B1 (CA); RISHEA, Marc, Murray, Burlington, Ontario L7P 3R5 (CA); TACKABERRY, Patrick, Donald, Oakville, Ontario L6H 1K6 (CA)
(74) Representative: Howden, Christopher Andrew
(86) International application number: CA9600493
(87) International publication number: WO9705294

(56) References cited:
- EP-A- 0 272 060
- US-A- 4 426 225
- US-A- 4 426 251
- US-A- 4 537 628
- US-A- 4 668 289

## Description

### FIELD OF THE INVENTION

The invention relates to methods of removing impurities from and of increasing the gold content of metallic gold compositions, especially high grade gold scrap or dore gold bars.

### BACKGROUND OF THE INVENTION

Gold is extensively used as a precious metal. It has traditionally been incorporated in jewellery, flatware, watches, and objects of art. Increasingly, gold is being used in industrial applications such as electronic components, cables, electrical connectors and the like.

Since some gold products, e.g. products such as watches, some forms of estate and other jewellery and electrical connectors often have a limited lifespan, a significant amount of scrap gold is produced annually. Most of the gold in the scrap gold products is not pure gold metal. In practice, gold is often alloyed with silver, copper, zinc and/or nickel. These ingredients improve the hardness and strength properties of pure gold. For instance, gold used in some jewellery may contain approximately 42% gold, 40% to 50% copper, 4% to 7.5% zinc, and 3% to 7% silver.

When scrap gold is to be processed into pure gold, separation of the gold from the other base metals is required. There are three principal methods of separating gold from its impurities, firing, electro-chemistry, and leaching or dissolution of the gold followed by zinc dust precipitation. The purification of gold is made all the more difficult by the similar characteristics of gold and silver. Both metals have similar melting points, and both have similar electro-chemical properties. As a result, so-called "four nines gold" i.e. gold having a purity of 99.99%, is recovered from scrap gold via a combination of firing, leaching or dissolution/precipitation and electro-chemical methods. The gold refining industry often uses the so-called "Miller chlorine process", wherein a volume of chlorine gas is passed through molten scrap gold, followed by an electrochemical separation step.

Typically, scrap gold is fired in a furnace to boil away (vaporize) some of the impurities, such as zinc. Other metals, such as silver, do not boil away during the firing process, so the purity of the resulting gold mixture is not high, usually below 80%. If the Miller chlorine process is used, it is understood that purities as high as 99.6% may be obtained, provided that there are no platinum group metals as an impurity. If an electro-chemical method is used, the scrap gold is dissolved in a solution, e.g. a cyanide solution, and the gold is separated from the dissolved impurities by applying a selected voltage to electrodes immersed in the solution. The purity of gold obtainable by electro-chemistry is high; however, electrochemical techniques tend to be difficult when there are large amounts of impurities in solution.

Alternatively, the gold scrap can be dissolved in a cyanide solution and the gold precipitated out of solution by the addition of zinc dust. When the zinc dust is added, the gold plates onto the surface of the zinc particles. However, as the concentration of gold in solution decreases, silver and copper also precipitate out of solution along with the gold. This method of purification does not permit complete separation of gold from its impurities.

U.S. Patent 4 426 225 of N.N. Ida et al discloses a method of recovering visible gold plate from scrap materials generated in the production of printed circuit boards by etching the base metal with an aqueous nitric acid etching solution in the presence of a frothing agent, to enable flake gold to be separated in the froth. U.S. 4 668 289 of S.H. Langer et al discloses a method for reclaiming gold in metallic form from gold-containing scrap using a leaching solution that includes halide ions.

U.S. Patent 4 537 628 of V.I. Lakshmanan et al. discloses a method for recovery of a precious metal e.g. gold, from a sulphide-containing arsenic- and/or antimony-containing material by oxidation of part of the arsenic and/or antimony content to a water-soluble form prior to processing to effect recovery of the precious metal e.g. using cyanide, thiosulphates or thiourea.

Existing separation technology tends to be complicated, expensive and of environmental concern. Furthermore, the equipment used in the present separation methods needs frequent maintenance and replacement because of fouling by large amounts of impurities. There is a need for an efficient, low cost and environmentally-friendly method of gold purification.

### SUMMARY OF THE INVENTION

The present invention is directed at a method of removing impurities from metallic gold compositions, which may be referred to herein as "raw gold", comprising the step of exposing the raw gold to a leach liquor. The leach liquor is selected to dissolve impurities from the raw gold without dissolving a significant amount of the gold metal.

The present invention is also directed at a method of purifying gold comprising the step of leaching away impurities from the raw gold by exposing the raw gold to a solution that is highly acidic and which also has a high oxidative potential. The present method may also comprise the additional steps of plastically deforming the gold prior to leaching, and roasting the gold in an oxidizing and/or reducing atmosphere before leaching.

Accordingly, one aspect of the present invention provides a method of increasing the gold content of a metallic composition primarily formed from gold and other metals in metallic state, the method comprising the steps of (i) subjecting the metallic gold composition to at least one of roasting, and gas atomization, and (ii) treating the metallic gold composition obtained from step (i) with a strongly acidic oxidizing leach liquor, the leach liquor being selected to dissolve the impurities from the metallic gold composition, the leach liquor further being selected such that gold has a low solubility in the leach liquor.

In preferred embodiments of the method of the invention, the leach liquor is nitric acid, nitric acid in combination with gaseous oxygen or especially Caro's acid.

### BRIEF DESCRIPTION OF THE DRAWINGS

The method of the present invention may be illustrated by the embodiments shown in the drawings, in which:

FIGURE 1 is a schematic representation of the method of the present invention.

FIGURE 2 is a schematic representation of an alternative embodiment of the present invention.

### DETAILED DESCRIPTION OF THE INVENTION

As used herein, the metallic gold composition, also referred to as raw gold, is unleached gold-containing solid material, for example precipitates, concentrates and alloy materials. For instance, the metallic gold composition includes scrap gold such as broken jewellery, discarded electronic connectors, concentrate from mechanical processing of electronic scrap, broken flat ware, gold ore concentrate, and a variety of other metallic gold compositions. In a particularly preferred embodiment, it is expected that the raw gold will consist largely of scrap gold. Dore gold bars, containing approximately 40% gold by weight, may also be used as a source of raw gold. It is to be understood that the metallic gold composition referred to in this specification consists of mixtures, alloys or the like, primarily formed from gold and other metals.

In addition, reference is made herein to use of leach liquor to dissolve impurities or other components of the metallic gold composition. It is to be understood that such leach liquor may leach out the component without chemical change to the component but more commonly the component will undergo a chemical change including oxidation and/or other chemical conversion e.g. into a nitrate or sulphate if nitric acid or Caro's acid are used as the leach liquor.

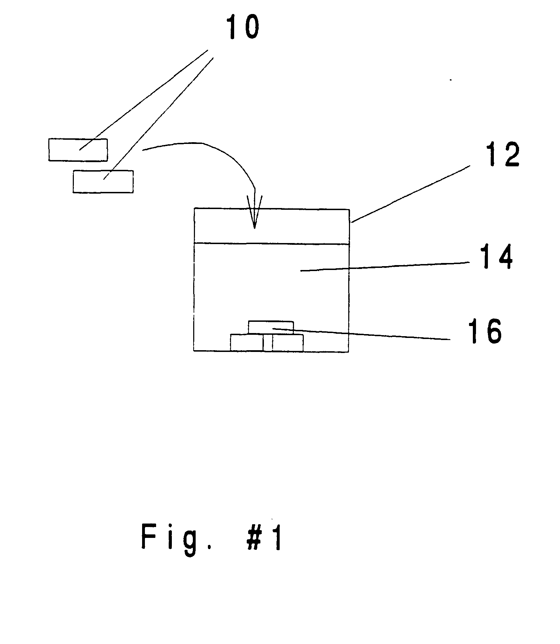

Referring firstly to Figure 1, the present method comprises the step of treating metallic gold compositions, also referred to herein as raw gold, shown generally as 10, with a leaching liquor, shown generally as 12, contained in a vat 14. Vat 14 preferably has an inert inner coating. Vat 14 is provided with an impeller or some other means for agitating the leaching liquor. The raw gold remains in contact with the leaching liquor for a sufficient time to dissolve away the impurities, e.g. copper, silver, zinc and nickel. As discussed herein, the leach liquor is selected to dissolve the impurities but to not dissolve gold to significant extents.

In the leaching step, impurities contained in the raw gold are leached away and gold residue 16 is left undissolved. Depending on the thickness of the pieces of raw gold, anywhere from a few hours to about 20 hours are required to dissolve the impurities from the raw gold. The leaching process may be accompanied by the evolution of gas, depending on the leach liquor used. During the leaching step, the impurities in the gold may be oxidized, and are dissolved into solution, leaving metallic gold. As the leaching process proceeds, the purity of gold residue 16 increases. As more of the impurities are leached away, the gold residue becomes fragile and may even crumble.

Depending on the leach liquor and treatment conditions used, the gold residue 15 may contain about 93% or more of metallic gold. A major portion of the copper, zinc and silver is typically leached away, leaving a small quantity of copper and silver in the residue. In some circumstances, the purity of the gold residue is sufficiently high that the remaining impurities may be removed by simple firing or electrolysis. Such a subsequent purification step is simplified since the purity of the gold residue is already high, eliminating the need for removing large quantities of copper and silver. In aspects of the invention, the constituent ingredients of the leach liquor are selected to provide a purity of the residue gold that approaches 95%, possibly eliminating the need for further purification steps.

The components of the leaching liquor must be selected to yield a solution that has a low pH, a high oxidative potential. Preferably the solution is an aqueous solution of a strong acid in combination with oxidative agents.

The leach liquor is also selected so that there is minimal dissolution of gold. It is understood that the leach liquor may dissolve an amount of gold, which may be recovered from the solution by known techniques, but the leach liquor and the conditions of use should be selected to minimize dissolution of gold. In particular, leach liquor containing chlorine, or other halogens, should not be used. Complexing agents which might aid or facilitate dissolution of gold should not be used in the leach liquor. The ingredients of the leach liquor are selected to ensure that the resulting leach liquor will dissolve the non-auric components and impurities without significantly dissolving gold.

Many suitable acids may be used, including HNO₃, H₂SO₄, chromic acid and HClO₄ (perchloric acid). Combinations of acids may also be used. Suitable oxidizing agents include hydrogen peroxide (H₂O₂), permanganate especially potassium permanganate, nitric acid (HNO₃), and O₂.

A particularly preferred leach liquor is Caro's acid viz. peroxysulphuric acid or persulphuric acid, which has the formula H₂SO₅ or HOSO₂OOH. Such an acid is both highly acidic and a strong oxidizing agent. It is preferred because the sulphates formed with impurities in the gold e.g. copper, are soluble in aqueous solution and thus readily separated from metallic gold. In addition, the sulphates obtained are readily separated e.g. using precipitation techniques, and environmental risks are reduced especially in comparison to N-containing liquors. In embodiments of the invention, Caro's acid is used in both step(i) and step (ii) of the method, optionally combined into one step.

The copper contained in raw gold may assist in the leaching of impurities during the leaching step, e.g. if the leach liquor comprises HNO₃ and gaseous O₂. As an illustration, and without being bound by such theory, the following reactions may represent what occurs when the raw gold contains copper and the leach liquor comprises HNO₃ and gaseous O₂ [ref.: Cotton and Wilkinson]: 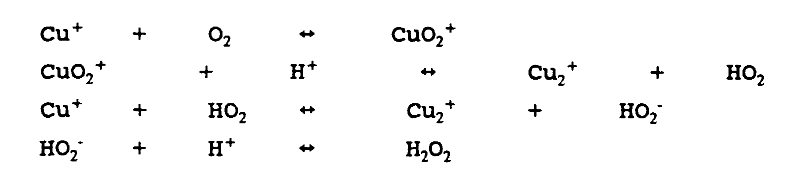 Hydrogen peroxide (H₂O₂) is produced as a result of the effect of H⁺ and O₂ in the leach liquor.

Similarly, the features of the invention are further illustrated by the following series of procedures involving different leach liquors:

A leach liquor is prepared comprising an aqueous solution of 8N HNO₃. The leach liquor is placed in a reaction vat and oxygen gas is bubbled through the liquor. The raw gold is placed in the reaction vat and the impurities in the raw gold are allowed to dissolve. After a period of several hours, the gold residue is removed from the reaction vat. The following equations are believed to illustrate the chemistry of the leaching or dissolution of impurities by the HNO₃ leach liquor.

1. 4 HNO₃ + O₂ + 2Me ↔ 2Me⁺² + 4NO₃⁻ + 2H₂O

2. 2 HNO₃ + Me ↔ Me⁺² + 2NO₃⁻ + H₂(g)

The impurities are represented in equations 1 and 2 by Me. As stated earlier, the principle impurities are copper, zinc, silver and nickel.

A leach liquor is prepared comprising 8N H₂SO₄. The sulphuric acid is placed in a reaction vessel and oxygen gas is bubbled through the solution. The raw gold is placed in the reaction vessel and the impurities are dissolved away leaving a gold residue. The following equation is believed to describe the dissolution of the impurities in this leaching environment.

3. H₂SO₄ + ½ O₂ + Me ↔ H₂O + Me²⁺ + SO₄²⁻

4. H₂SO₄ + Me ↔ H₂(g) + SO₄²⁻ + Me²⁺

The preferred leaching liquor is the aforementioned Caro's acid. Caro's acid may be used in conjunction with other oxidizing agents.

An oxidizing agent may be used in addition to the acid, or the acid could also be the oxidizing agent. O₂ gas can be added to a potential leach liquor to enhance the oxidizing capacity of the liquor. Hydrogen peroxide H₂O₂ is another good oxidizing agent. There are a number of other oxidizing agents that are expected to be useful, including HNO₃, Caro's acid and a variety of organic acids. The addition of O₂ gas to the leach liquor has been observed to significantly increase the leaching effectiveness of the leach liquor. The catalytic role of Cu⁺ in the presence of O₂ and H⁺ may play an important part in increasing the effectiveness of the leach liquor by the presence of gaseous O₂. Increasing the temperature of the leaching liquor will increase the reaction rate.

The surface of the raw gold may be hydrophobic and therefore resistant to leaching due to poor contact between the metal surface and the leach liquor. A wetting agent may be added to the leach liquor to overcome the hydrophobic surface. The wetting agent should not interfere with the other properties of the leach liquor. Indeed, if the wetting agent is selected carefully, the wetting agent may also act as a metal cation complexing agent. Alternatively, the surface of the raw gold may be washed with the wetting agent before immersion in the leaching bath. The surfactant CW - 602 is a suitable wetting agent. Tributyl phosphate (TBP) may also be used.

An oxidative roasting step before exposure to the leach liquor increases the efficiency of the leaching process. Oxides of copper, silver and zinc are readily dissolved by acid liquors. The oxidation of the non-gold (non-auric) components can be achieved by exposing the raw gold to an oxidative atmosphere under elevated pressures and temperatures. Oxygen gas is a suitable oxidizing atmosphere. Preferably, the oxidative roasting should take place at temperatures of at least approximately 800°C but the preferred temperature will likely vary with the gold composition and morphology. The oxidative atmosphere may have to be replenished as the copper, silver and zinc impurities are converted to their oxides. For accelerated oxidative roasting, the amount of O₂ in the atmosphere should be elevated by increasing the concentration of O₂ gas in the atmosphere, and/or elevating the pressure of the atmosphere.

The efficiency of the oxidative roasting process can be increased if the raw gold is pre-treated to decrease the activation energy for the oxidation of the impurities. Preferably, this is done by increasing the strain energy around the grains of impurities contained in the raw gold. The strain energy can be increased by subjecting the raw gold to a plastic deformation. Plastic deformation of the gold can be accomplished by cold rolling the raw gold into thin sheets. During the rolling process, the average molecular strain of the constituents of the raw gold increases. It is known that impurities have a tendency to form coherent and incoherent crystal structures within grains of the raw gold. Such structures are believed to enhance the likelihood that the impurities will oxidize.

Plastic deformation may decrease the conductivity of the raw gold, thereby reducing the anodic potential at those gold crystal imperfection sites containing base metal impurities relative to the impurity-free cathodic gold crystal sites, thereby inhibiting the occurrence of galvanic corrosion of the impurities. The rolling process may also increase the hydrophobicity of the surface of the raw gold, further decreasing the effectiveness of the leaching step. The addition of a wetting agent may help to alleviate the problems associated with increased surface hydrophobicity. It has been discovered that an oxidative roasting step after rolling and prior to leaching tends to overcome the problems associated with plastic deformation. The impurities tend to form oxides that dissolve readily in the aqueous leach liquor, regardless of any increased hydrophobicity. Therefore, if the raw gold is to be plastically deformed, an oxidative roast should be performed after plastic deformation and before leaching.

Rolling the raw gold not only increases the strain energy of the metal, it also increases its surface area to volume ratio. The higher the ratio of surface area to volume, the faster the leaching process should occur. High surface areas are preferred. Rolling is only one way to increase the surface area. The metal may also be broken into tiny particles. Each small particle will have a higher surface area to volume ratio than the original bar of raw gold. Large pieces of raw gold, can be converted into fine granules by grinding. Alternatively (or additionally), the raw gold may be melted and then sprayed through a nozzle, a method known as gas atomization. As the molten metal cools, it solidifies into tiny beads. Preferably, the molten metal is sprayed into an oxygen atmosphere so that oxidation occurs at the same time as the beads are formed. Spraying the molten gold beads into a quenching medium, such as water, has the added advantage of increasing the strain energy of the metal. The sprayed material will have vacancy discs at coherent and incoherent crystal stacking. The increased strain energy and the vacancy discs increase the effectiveness of the process. It is expected that the decreased conductivity and increased surface hydrophobicity associated with rolling can be minimized by oxygen gas atomization.

It has been discovered that a combination of rolling followed by oxidative roasting in an oxygen atmosphere at a temperature of approximately 800°C significantly increases the effectiveness of the leaching step.

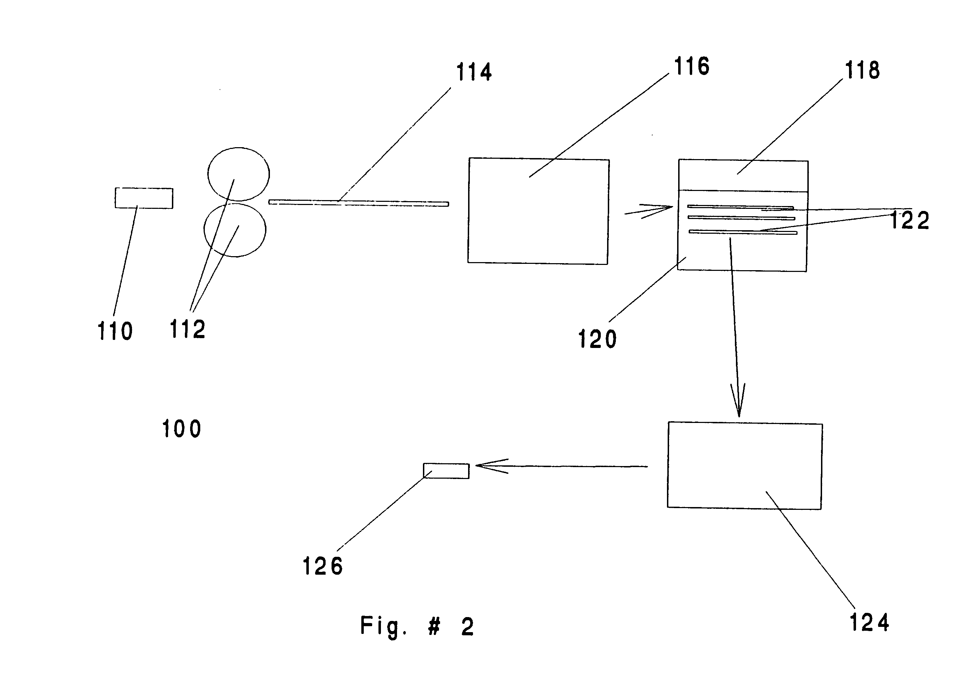

An alternate method of purifying gold is illustrated in the embodiment of Fig. 2. Raw gold 110 is first plastically deformed by rollers 112 to form a foil 114. The rolling step is performed at low temperature (no higher than room temperature) to prevent relaxation of the raw gold. The raw gold foil 114 is then placed in an oxidative roaster 116, where the foil is exposed to an oxygen atmosphere. The pressure of the atmosphere is elevated to increase the rate of oxidation. The temperature of the atmosphere is maintained for example at 800°C, to promote the oxidation of the impurities. Oxidation proceeds for a predetermined interval of time ranging from an hour to 24 hours, depending on the impurity content of the raw gold.

After oxidation, foil 114 is placed in leaching vat 118 where it is exposed to leach liquor 120. The gas component 123 of the leach liquor may be introduced via gas feed line 125. During the leaching step, copper, zinc and silver metal, as well as their oxides, are leached away from gold foil 114 leaving a gold residue 122. Depending on the amount of impurities in the raw gold, gold residue 122 may remain as a foil or as a crumbly mass.

If the purity of gold residue 122 is insufficient, the gold residue may again be subjected to an additional oxidative roast followed by another exposure to the leach liquor. Preferably, gold foil 114 would be leached in the leach liquor, then oxidatively roasted, then leached again in the leach liquor, then oxidatively roasted again followed by a final leaching step. The resulting gold residue 122 is expected of high purity.

Assuming the purity of gold residue 122 to be less than four nines purity, the residue may be fired in a furnace 124 and the remaining impurities burned away to form purified gold 126. The problems normally associated with purification by firing should be reduced or eliminated due to the high purity of gold residue 122.

In an alternate embodiment of the present invention, a reductive leach may be conducted after the last oxidative leach. A solution of NaBH₄ would be a suitable reductive leach liquor. Alternatively, the gold concentrate could be subjected to a reduction atmosphere, say H₂ or CO (carbon monoxide), after the last oxidative leach step. In either procedure, silver oxide would be reduced to silver metal, which is soluble in most acidic leach liquors. By reducing the silver oxides in the raw gold to silver metal, a further oxidative leach may successfully dissolve away the remaining silver in the raw gold. The reduced gold concentrate can then be placed in an acidic leach liquor to leach away the remaining silver metal.

In another embodiment, the raw gold is subjected to reductive and then oxidative roasts, with an intermediate leaching step and a subsequent leaching step.

The present invention provides a method of purifying gold in the form of solid gold materials. The leach liquor is selected to dissolve the impurities from the metallic gold composition and such that gold has a low solubility in the leach liquor. In particularly preferred embodiments of the invention, especially using Caro's acid, this may be accomplished in an environmentally acceptable manner.

The present invention is illustrated by the following examples.

### EXAMPLE I

Samples of 10 carat (K) scrap gold jewellery were treated with a variety of solutions, to test procedures to obtain gold of high purity from the scrap gold jewellery. Ten carat gold used in these examples contained approximately 41.7% gold and 6.88% silver. The scrap gold had been mechanically rolled to increase the surface area, especially the ratio of surface area to weight.

### COMPARATIVE RUN

A sample of the scrap gold was subjected to leaching in 8N nitric acid for 24 hours. The gold content in the resultant sample was found to be 45% by weight.

### RUN A

A sample of the scrap gold was subjected to a roast at 800°C in air for a period of 24 hours, followed by leaching in 8N nitric acid for 24 hours. The gold content in the resultant sample was not assayed but was calculated from the weight of the sample obtained as being approximately 56%. The roasting of the sample of scrap gold had resulted in a significant increase in the amount of gold in the resultant (treated) sample.

### RUN B

A sample of the scrap gold was subject to Caro's acid for a period of 8 hours followed by treatment with 8N nitric acid for 24 hours. Caro's acid is a mixture of hydrogen peroxide (1%), sulphuric acid (60%) and peroxymonosulphuric acid (29%). The sample obtained was calculated to have approximately 61% gold.

### RUN C

In a procedure of the present invention, a sample of the scrap gold was treated at 800°C in air for 24 hours followed by treatment with 8N nitric acid for 24 hours. The procedure was then repeated on the same sample i.e. it was subjected to the 800°C air roast for an additional 24 hours followed by leaching in 8N nitric acid for 24 hours. The sample obtained had a gold content of 83%.

### RUN D

A sample of the scrap gold was subjected to a roast in air at 800°C for 24 hours, followed by leaching with 2N nitric acid for 24 hours, a further roast in air at 800°C for 24 hours and an additional leaching with 8N nitric acid for 24 hours. The sample obtained had a gold content of 82.5%.

### RUN E

A sample of the scrap gold was subjected to an 800°C roast in air for 24 hours followed by leaching with a 8N nitric acid in the presence of oxygen, followed by a further roast under the same conditions and then further leaching with 8N nitric acid in the presence of oxygen. The resultant sample had a gold content of 82%.

### RUN F

A sample of the scrap gold was subjected to a reducing atmosphere at 800°C for 24 hours followed by leaching in 8N nitric acid in the presence of oxygen for 24 hours. The sample obtained had a theoretical amount of 44% of gold. The sample was then subjected to further leaching with 8N nitric acid in the presence of oxygen at 60°C for 6 hours, to give a sample that had a theoretical amount of 73% gold. The sample obtained was then further treated in air at 800°C for 24 hours followed by leaching with 8N nitric acid in the presence of oxygen for 24 hours to give a sample that contained 97.2% gold.

### EXAMPLE II

Samples of 12 carat scrap gold jewellery were treated with a variety of solutions and treatments to obtain gold of higher purity from scrap gold. The samples of the 12 carat scrap gold jewellery had been melted and atomized under two conditions: using an atmosphere of air or nitrogen gas. The atomized materials contained approximately 53% to 56% gold and 10% silver.

### Run A

A sample of the air-atomized scrap gold was subjected to the following steps, in sequence: CO reduction at 500°C for 24 hours, leaching in 8N nitric acid with oxygen at 60°C for 24 hours, roasting the solid residue in air for 24 hours at 500°C, and leaching in 8N nitric acid with oxygen at 60°C for 24 hours. The gold content calculated from the solids obtained was 94% gold.

### Run B

A sample of the nitrogen-gas atomized scrap gold was subjected to the following steps, in sequence: CO reduction at 500°C for 24 hours, leaching in 8N nitric acid with oxygen at 60°C for 24 hours, roasting the solid residue in air for 24 hours at 500°C, and leaching in 8N nitric acid with oxygen at 60°C for 24 hours. The gold content calculated from the solids obtained was 93% gold.

### Run C

A sample of the air-atomized scrap gold was subjected to the following steps, in sequence: leaching in 8N nitric acid with oxygen at 60°C for 24 hours, roasting the solid residue in air for 24 hours at 500°C, leaching in 8N nitric acid with oxygen at 60°C for 24 hours, hydrogen reduction at 500°C for 24 hours, and leaching in 8N nitric acid with oxygen at 60°C for 24 hours. The gold content of the resultant solid assay at 94% gold.

### Run D

A sample of the nitrogen-gas atomized scrap gold was subjected to the following steps, in sequence: leaching in 8N nitric acid with oxygen at 60°C for 24 hours, roasting the solid residue in air for 24 hours at 500°C, leaching in 8N nitric acid with oxygen at 60°C for 24 hours, hydrogen reduction at 500°C for 24 hours, and leaching in 8N nitric acid with oxygen at 60°C for 24 hours. The gold content of the resultant solid assay at 94% gold.

### Run E

A sample of the air-atomized scrap gold was subjected to the following steps, in sequence: leaching in 0.5M sulphuric acid using Caro's acid to raise the EMF above 450 mv, at 60°C for 24 hours, roasting the solid residue in air for 24 hours at 500°C, leaching in 0.5 M sulphuric acid using Caro's acid to raise the EMF above 450 mv, at 60°C for 24 hours, roasting the solid residue in air for 24 hours at 500°C, and leaching in 0.5M sulphuric acid using Caro's acid to raise the EMF above 450 mv. at 60°C for 24 hours. The calculated gold content of the resultant solid was 90% gold.

### Run F

A sample of the air-atomized scrap gold was subjected to the following steps, in sequence: roasting in air for 24 hours at 500°C, leaching in 0.5M sulphuric acid using Caro's acid to raise the EMF above 450 mv. at 60°C for 24 hours, roasting the solid residue in air for 24 hours at 500°C, and leaching in 0.5M sulphuric acid using Caro's acid to raise the EMF above 450 mv. at 60°C for 24 hours. The calculated gold content of the resultant solid is 93% gold.

While the method of the invention has been illustrated and described with respect to preferred embodiments, it will be appreciated by those skilled in the art that numerous variations of these embodiments may be made without departing from the scope of the invention.

## Claims

1. A method of increasing the gold content of a metallic composition primarily formed from gold and other metals in metallic state, the method comprising the steps of (i) subjecting the metallic gold composition to at least one of roasting and gas atomization, and (ii) treating the metallic gold composition obtained from step (i) with a strongly acidic oxidizing leach liquor, the leach liquor being selected to dissolve the impurities from the metallic gold composition, the leach liquor further being selected such that gold has a low solubility in the leach liquor.

2. The method of increasing the gold content of a metallic gold composition of Claim 1 in which the leach liquor comprises a solution of a strong acid and an oxidizing agent.

3. The method of increasing the gold content of a metallic gold composition of any one of Claim 1 or Claim 2 further comprising the step of plastically deforming the metallic gold composition prior to exposure to the leaching solution.

4. The method of increasing the gold content of a metallic gold composition of Claim 3 further comprising the step of roasting the metallic gold composition in an oxidizing atmosphere, in step (i), after plastic deformation.

5. The method of increasing the gold content of a metallic gold composition of Claim 3 in which the metallic gold composition is plastically deformed by rolling.

6. The method of increasing the gold content of a metallic gold composition of any one of Claims 1-5 further comprising the step of roasting the metallic gold composition in an oxidative atmosphere after the metallic gold composition is exposed to the leaching liquor and then exposing the roasted metallic gold composition to the leaching liquor to remove the further impurities.

7. The method of increasing gold content of any one of Claims 1-6 in which at least one roasting is carried out in a reducing atmosphere.

8. The method of increasing the gold content of a metallic gold composition of any one of Claims 1-7 in which the metallic gold composition is roasted in an oxidizing atmosphere before exposure to the leaching solution.

9. The method of increasing the gold content of a metallic gold composition of any one of Claims 1-8 in which the roasting step is carried out at a temperature of at least 500°C in an oxygen atmosphere.

10. The method of increasing gold content of Claim 9 in which the temperature is at least 800°C.

11. The method of increasing the gold content of a metallic gold composition of any one of Claims 1-10 in which the metallic gold composition is spray atomized before treating with the leaching liquor.

12. The method of increasing the gold content of a metallic gold composition of Claim 11 in which the metallic gold composition is spray atomized in an oxygen atmosphere and then quenched before treating with the leaching liquor.

13. The method of increasing gold content of any one of Claims 1-12 in which the metallic gold composition is treated to increase the ratio of surface area to volume.

14. The method of increasing gold content of any one of Claims 1-13 in which the leach liquor is Caro's acid.

15. The method of increasing gold content of any one of Claims 1-13 in which the leach liquor is nitric acid.

16. The method of increasing gold content of any one of Claims 1-13 in which the leach liquor is nitric acid in the presence of gaseous oxygen.

17. The method of increasing the gold content of a metallic gold composition of any one of Claims 1-16 in which the leach liquor further comprises a wetting agent.

18. The method of increasing the gold content of a metallic gold composition of any one of Claims 1-17 in which said impurities comprise at least one of copper, silver, zinc and nickel.

19. The method of increasing the gold content of a metallic gold composition of any one of Claims 1-18 in which the gold content of the starting composition is at least 40% by weight.

20. The method of increasing the gold composition of any one of Claims 1-19 in which the gold content of the final composition is at least 93% by weight.

## Patentansprüche

1. Verfahren zur Erhöhung des Goldgehalts einer metallischen Zusammensetzung, die primär aus Gold und anderen Metallen in einem metallischen Zustand gebildet ist, wobei das Verfahren die Schritte umfaßt: (i) Unterziehen der metallischen Goldzusammensetzung zumindest einem Rösten oder einer Gaszerstäubung und (ii) Behandeln der anhand des Schrittes (i) erhaltenen metallischen Goldzusammensetzung mit einer stark sauren oxidierenden Löseflüssigkeit, wobei die Löseflüssigkeit ausgewählt ist, um die Verunreinigungen aus der metallischen Goldzusammensetzung zu lösen, und die Löseflüssigkeit ferner so ausgewählt ist, daß Gold eine schwache Lösbarkeit in der Löseflüssigkeit aufweist.

2. Verfahren zur Erhöhung des Goldgehalts einer metallischen Goldzusammensetzung nach Anspruch 1, bei dem die Löseflüssigkeit eine Lösung aus einer starken Säure und einem Oxidationsmittel umfaßt.

3. Verfahren zur Erhöhung des Goldgehalts einer metallischen Goldzusammensetzung nach irgendeinem der Ansprüche 1 oder 2, das ferner den Schritt des plastischen Verformens der metallischen Goldzusammensetzung vor der Löseflüssigkeitseinwirkung umfaßt.

4. Verfahren zur Erhöhung des Goldgehalts einer metallischen Goldzusammensetzung nach Anspruch 3, das ferner den Schritt des Röstens der metallischen Goldzusammensetzung in einer oxidierenden Atmosphäre in dem Schritt (i) nach der plastischen Verformung umfaßt.

5. Verfahren zur Erhöhung des Goldgehalts einer metallischen Goldzusammensetzung nach Anspruch 3, bei dem die metallische Goldzusammensetzung durch Walzen plastisch verformt wird.

6. Verfahren zur Erhöhung des Goldgehalts einer metallischen Goldzusammensetzung nach irgendeinem der Ansprüche 1 - 5, das ferner den Schritt des Röstens der metallischen Goldzusammensetzung in einer oxidativen Atmosphäre, nachdem die metallische Goldzusammensetzung der Einwirkung der Löseflüssigkeit ausgesetzt ist, und dann Einwirkenlassen der Löseflüssigkeit auf die geröstete metallische Goldzusammensetzung zum Entfernen der weiteren Verunreinigungen zu entfernen, umfaßt.

7. Verfahren zur Erhöhung des Goldgehalts einer metallischen Goldzusammensetzung nach irgendeinem der Ansprüche 1 - 6, bei dem wenigstens ein Rösten in einer reduzierenden Atmosphäre durchgeführt wird.

8. Verfahren zur Erhöhung des Goldgehalts einer metallischen Goldzusammensetzung nach irgendeinem der Ansprüche 1 - 7, bei dem die metallische Goldzusammensetzung in einer oxidierenden Atmosphäre geröstet wird, bevor sie der Einwirkung der Löseflüssigkeit ausgesetzt wird.

9. Verfahren zur Erhöhung des Goldgehalts einer metallischen Goldzusammensetzung nach irgendeinem der Ansprüche 1 - 8, bei dem der Röstschritt bei einer Temperatur von wenigstens 500 °C in einer Sauerstoffatmosphäre durchgeführt wird.

10. Verfahren zur Erhöhung des Goldgehalts nach Anspruch 9, bei dem die Temperatur wenigstens 800 °C beträgt.

11. Verfahren zur Erhöhung des Goldgehalts einer metallischen Goldzusammensetzung nach irgendeinem der Ansprüche 1 - 10, bei dem die metallische Goldzusammensetzung vor der Behandlung mit der Löseflüssigkeit zerstäubt wird.

12. Verfahren zur Erhöhung des Goldgehalts einer metallischen Goldzusammensetzung nach Anspruch 11, bei dem die metallische Goldzusammensetzung in einer Sauerstoffatmosphäre zerstäubt und dann vor der Behandlung mit der Löseflüssigkeit abschreckgehärtet wird.

13. Verfahren zur Erhöhung des Goldgehalts einer metallischen Goldzusammensetzung nach irgendeinem der Ansprüche 1 - 12, bei dem die metallische Goldzusammensetzung behandelt wird, um das Verhältnis von Oberflächengebiet zu Volumen zu erhöhen.

14. Verfahren zur Erhöhung des Goldgehalts nach irgendeinem der Ansprüche 1 - 13, bei dem die Löseflüssigkeit Carosche Säure ist.

15. Verfahren zur Erhöhung des Goldgehalts nach irgendeinem der Ansprüche 1 - 13, bei dem die Löseflüssigkeit Salpetersäure ist.

16. Verfahren zur Erhöhung des Goldgehalts nach irgendeinem der Ansprüche 1 - 13, bei dem die Löseflüssigkeit Salpetersäure bei Anwesenheit von gasförmigem Sauerstoff ist.

17. Verfahren zur Erhöhung des Goldgehalts einer metallischen Goldzusammensetzung nach irgendeinem der Ansprüche 1 - 16, bei dem die Löseflüssigkeit ferner ein Benetzungsmittel umfaßt.

18. Verfahren zur Erhöhung des Goldgehalts einer metallischen Goldzusammensetzung nach irgendeinem der Ansprüche 1 - 17, bei dem die Verunreinigungen wenigstens eines von Kupfer, Silber, Zink und Nickel umfassen.

19. Verfahren zur Erhöhung des Goldgehalts einer metallischen Goldzusammensetzung nach irgendeinem der Ansprüche 1 - 18, bei dem der Goldgehalt der Anfangszusammensetzung wenigstens 40 Gew.% beträgt.

20. Verfahren zur Erhöhung der Goldzusammensetzung nach irgendeinem der Ansprüche 1 - 19, bei dem der Goldgehalt der Endzusammensetzung wenigstens 93 Gew.% beträgt.

## Revendications

1. Un procédé pour augmenter la teneur en or d'une composition métallique formée principalement d'or et d'autres métaux à l'état métallique, le procédé comprenant les étapes de (i) soumettre la composition d'or métallique à au moins un grillage et/ou une pulvérisation dans un gaz, et (ii) de traiter la composition d'or métallique résultant de l'étape (i) avec une liqueur de lessive oxydante fortement acide, la liqueur de lessive étant choisie pour dissoudre les impuretés de la composition d'or métallique, la liqueur de lessive étant de plus choisie de sorte que l'or a une solubilité faible dans la liqueur de lessive.

2. Le procédé pour augmenter la teneur en or d'une composition d'or métallique selon la revendication 1 dans lequel la liqueur de lessive comprend une solution d'un acide fort et d'un agent oxydant.

3. Le procédé d'augmentation de la teneur en or d'une composition d'or métallique selon l'une quelconque des revendications 1 et 2, comprenant de plus l'étape de déformer plastiquement la composition d'or métallique avant de l'exposer à la solution de lessivage.

4. Le procédé d'augmentation de la teneur en or d'une composition d'or métallique selon la revendication 3, comprenant également l'étape de griller la composition d'or métallique dans une atmosphère oxydante, à l'étape (i) après déformation plastique.

5. Le procédé d'augmentation de la teneur en or d'une composition d'or métallique selon la revendication 3 dans lequel la composition d'or métallique est déformée plastiquement par roulage.

6. Le procédé d'augmentation de la teneur en or d'une composition d'or métallique selon l'une quelconque des revendications 1 à 5, comprenant également l'étape de griller la composition d'or métallique dans une atmosphère oxydante après exposition de la composition d'or métallique à la liqueur de lessive et ensuite d'exposer la composition d'or métallique grillée à la liqueur de lessive pour extraire les autres impuretés.

7. Le procédé d'augmentation de la teneur en or selon l'une quelconque des revendications 1 à 6, dans lequel au moins un grillage est réalisé dans une atmosphère réductrice.

8. Le procédé d'augmentation de la teneur en or d'une composition d'or métallique selon l'une quelconque des revendications 1 à 7, dans lequel la composition d'or métallique est grillée dans une atmosphère oxydante avant d'être exposée à la solution de lessivage.

9. Le procédé d'augmentation de la teneur en or d'une composition d'or métallique selon l'une quelconque des revendications 1 à 8, dans lequel l'étape de grillage est réalisée à une température d'au moins 500°C dans une atmosphère d'oxygène.

10. Le procédé d'augmentation de la teneur en or selon la revendication 9 dans lequel la température est d'au moins 800°C.

11. Le procédé d'augmentation de la teneur en or d'une composition d'or métallique selon l'une quelconque des revendications 1 à 10, dans lequel la composition d'or métallique est atomisée par pulvérisation avant d'être traitée avec la liqueur de lessivage.

12. Le procédé d'augmentation de la teneur en or d'une composition d'or métallique selon la revendication 11, dans lequel la composition d'or métallique est atomisée par pulvérisation dans une atmosphère d'oxygène et est ensuite trempée avant traitement par la liqueur de lessivage.

13. Le procédé d'augmentation de la teneur en or selon l'une quelconque des revendications 1 à 12, dans lequel la composition d'or métallique est traitée pour augmenter le rapport de l'air superficiel et du volume.

14. Le procédé d'augmentation de la teneur en or selon l'une quelconque des revendications 1 à 13, dans lequel la liqueur de lessive est l'acide de Caro.

15. Le procédé d'augmentation de la teneur en or selon l'une quelconque des revendications 1 à 13, dans lequel la liqueur de lessive est l'acide nitrique.

16. Le procédé d'augmentation de la teneur en or selon l'une quelconque des revendications 1 à 13, dans lequel la liqueur de lessive est l'acide nitrique en présence d'oxygène gazeux.

17. Le procédé d'augmentation de la teneur en or d'une composition d'or métallique selon l'une quelconque des revendications 1 à 16, dans lequel la liqueur de lessive comprend également un agent mouillant.

18. Le procédé d'augmentation de la teneur en or d'une composition d'or métallique selon l'une quelconque des revendications 1 à 17, dans lequel les dites impuretés comprennent au moins un composant tel que le cuivre, l'argent, le zinc et le nickel.

19. Le procédé d'augmentation de la teneur en or d'une composition d'or métallique selon l'une quelconque des revendications 1 à 18 dans lequel la teneur en or de la composition initiale est d'au moins 40 % en poids.

20. Le procédé d'augmentation de la teneur en or selon l'une quelconque des revendications 1 à 19, dans lequel la teneur en or de la composition finale est d'au moins 93 % en poids.
